# EUROPEAN PATENT APPLICATION

(11) **EP 4 535 893 A1**
(43) Date of publication of application: **09.04.2025**
(21) Application number: 22944334.6
(22) Date of filing: 02.06.2022
(51) Int. Cl.: H04W 72/04

(54) **WIRELESS COMMUNICATION METHOD AND APPARATUS**

(71) Applicant: Quectel Wireless Solutions Co., Ltd., Shanghai 201601 (CN)
(72) Inventor: LYU, Ling, Shanghai 201601 (CN); ZHAO, Zheng, Shanghai 201601 (CN); YANG, Zhongzhi, Shanghai 201601 (CN)
(74) Representative: Fish & Richardson P.C.
(86) International application number: PCT/CN2022/096908
(87) International publication number: WO 2023/231005

(57) **Abstract**

The present disclosure provides a method and apparatus for wireless communication, to provide a clear solution for processing a resource conflict by a network device. The method includes: the network device determining, based on first information, one or more of the following events: whether a first transmission occasion for a first terminal to transmit a small data packet is valid; and whether a second transmission occasion for a second terminal to transmit a message A in a two-step random access procedure is valid. Resources of the second transmission occasion at least partially overlap with resources of the first transmission occasion. The first information includes one or more of: a service type of the small data packet; a trigger condition for triggering two-step random access; and a number of retransmissions for the small data packet.

## Description

### TECHNICAL FIELD

The present disclosure relates to the field of communication technology, and more specifically to a method and apparatus for wireless communication.

### BACKGROUND

In order to reduce signaling overhead of a terminal, a communication system allows the terminal to transmit small data packets to a network device in a radio resource control (RRC) inactive state. However, resources of a terminal for transmitting the small data packets may overlap with resources of another terminal for performing random access, that is, a resource conflict occurs.

Currently, there is no explicit regulation on how the network device should process such a resource conflict if it occurs.

### SUMMARY

In view of the above problem, the present disclosure provides a method and apparatus for wireless communication. Various aspects involved in the embodiments of the present disclosure are described below.

According to a first aspect, a method for wireless communication is provided, including: a network device determining, based on first information, one or more of the following events: whether a first transmission occasion for a first terminal to transmit a small data packet is valid; and whether a second transmission occasion for a second terminal to transmit a message A in a two-step random access procedure is valid; where resources of the second transmission occasion at least partially overlap with resources of the first transmission occasion; and where the first information includes one or more of: a service type of the small data packet; a trigger condition for triggering two-step random access; and a number of retransmissions for the small data packet.

According to a second aspect, a method for wireless communication is provided, including: a first terminal transmitting a small data packet to a network device on a first transmission occasion, where resources of the first transmission occasion at least partially overlap with resources of a second transmission occasion; where the second transmission occasion is used for a second terminal to transmit a message A in a two-step random access procedure to the network device, and whether the first transmission occasion or the second transmission occasion is valid is determined based on first information; and where the first information includes one or more of: a service type of the small data packet; a trigger condition for triggering two-step random access; and a number of retransmissions for the small data packet.

According to a third aspect, a method for wireless communication is provided, including: a second terminal transmitting a message A in a two-step random access procedure to a network device on a second transmission occasion, where resources of the second transmission occasion at least partially overlap with resources of a first transmission occasion; where the first transmission occasion is used for a first terminal to transmit a small data packet to the network device, and whether the first transmission occasion or the second transmission occasion is valid is determined based on first information; and where the first information includes one or more of: a service type of the small data packet; a trigger condition for triggering two-step random access; and a number of retransmissions for the small data packet.

According to a fourth aspect, an apparatus for wireless communication is provided, where the apparatus is a network device and includes: a determining unit, configured to determine, based on first information, one or more of the following events: whether a first transmission occasion for a first terminal to transmit a small data packet is valid; and whether a second transmission occasion for a second terminal to transmit a message A in a two-step random access procedure is valid; where resources of the second transmission occasion at least partially overlap with resources of the first transmission occasion; and where the first information includes one or more of: a service type of the small data packet; a trigger condition for triggering two-step random access; and a number of retransmissions for the small data packet.

According to a fifth aspect, an apparatus for wireless communication is provided, where the apparatus is a first terminal and includes: a transmitting unit, configured to transmit a small data packet to a network device on a first transmission occasion, where resources of the first transmission occasion at least partially overlap with resources of a second transmission occasion; where the second transmission occasion is used for a second terminal to transmit a message A in a two-step random access procedure to the network device, and whether the first transmission occasion or the second transmission occasion is valid is determined based on first information; and where the first information includes one or more of: a service type of the small data packet; a trigger condition for triggering two-step random access; and a number of retransmissions for the small data packet.

According to a sixth aspect, an apparatus for wireless communication is provided, where the apparatus is a second terminal and includes: a transmitting unit, configured to transmit a message A in a two-step random access procedure to a network device on a second transmission occasion, where resources of the second transmission occasion at least partially overlap with resources of a first transmission occasion; where the first transmission occasion is used for a first terminal to transmit a small data packet to the network device, and whether the first transmission occasion or the second transmission occasion is valid is determined based on first information; and the first information includes one or more of: a service type of the small data packet; a trigger condition for triggering two-step random access; and a number of retransmissions for the small data packet.

According to a seventh aspect, an apparatus for wireless communication is provided, including a processor, a memory, and a communication interface, where the memory is configured to store one or more computer programs, and the processor is configured to invoke the one or more computer programs in the memory to cause the terminal device to perform the method according to any one of the first aspect to the third aspect.

According to an eighth aspect, an apparatus is provided, including a processor, where the processor is configured to invoke a program from a memory to perform the method according to any one of the first aspect to the third aspect.

According to a ninth aspect, a chip is provided, including a processor, where the processor is configured to invoke a program from a memory to cause a device installed with the chip to perform the method according to any one of the first aspect to the third aspect.

According to a tenth aspect, a computer-readable storage medium is provided, where the computer-readable storage medium stores a program, and the program causes a computer to perform the method according to any one of the first aspect to the third aspect.

According to an eleventh aspect, a computer program product is provided, including a program, where the program causes a computer to perform the method according to any one of the first aspect to the third aspect.

According to a twelfth aspect, a computer program is provided, where the computer program causes a computer to perform the method according to any one of the first aspect to the third aspect.

In the embodiments of the present disclosure, when the resource of the first transmission occasion overlaps with the resource of the second transmission occasion, the network device may determine, based on the first information, whether the first transmission occasion is valid or whether the second transmission occasion is valid. By introducing the first information, a clear solution is provided for processing a resource conflict by the network device.

### BRIEF DESCRIPTION OF THE DRAWINGS

FIG. 1 is an exemplary diagram of a system architecture applicable to a communication system in an embodiment of the present disclosure.
FIG. 2 is a schematic flowchart of a four-step random access procedure.
FIG. 3 is a schematic flowchart of a two-step random access procedure.
FIG. 4 is a schematic flowchart of a method for wireless communication according to an embodiment of the present disclosure.
FIG. 5 is a schematic diagram of determining whether a transmission occasion is valid according to an embodiment of the present disclosure.
FIG. 6 is another schematic diagram of determining whether a transmission occasion is valid according to an embodiment of the present disclosure.
FIG. 7 is a schematic diagram of a correspondence among a service type, a resource pool, and a timer according to an embodiment of the present disclosure.
FIG. 8 is a schematic flowchart of a terminal device performing SDT according to an embodiment of the present disclosure.
FIG. 9 is a schematic flowchart of performing small data packet transmission based on a timer according to an embodiment of the present disclosure.
FIG. 10 is another schematic flowchart of performing small data packet transmission based on a timer according to an embodiment of the present disclosure.
FIG. 11 is a schematic structural diagram of a network device according to an embodiment of the present disclosure.
FIG. 12 is a schematic structural diagram of a first terminal according to another embodiment of the present disclosure.
FIG. 13 is a schematic structural diagram of a second terminal according to another embodiment of the present disclosure.
FIG. 14 is a schematic structural diagram of a communication apparatus according to an embodiment of the present disclosure.

### DETAILED DESCRIPTION OF THE EMBODIMENTS

The following describes the technical solutions in the present disclosure with reference to the accompanying drawings.

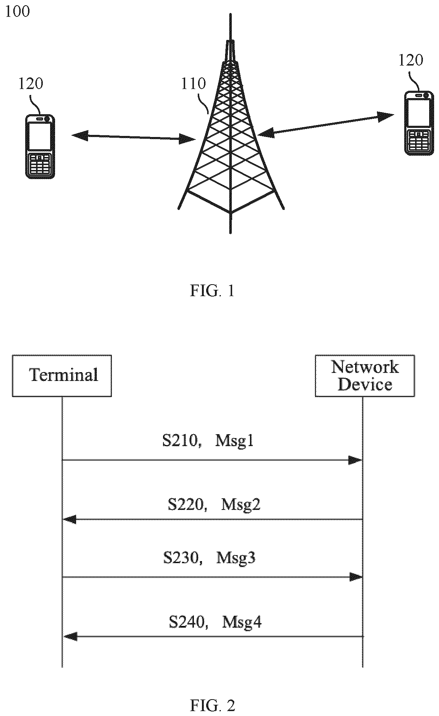

FIG. 1 is a wireless communication system 100 according to an embodiment of the present disclosure. The wireless communication system 100 includes a network device 110 and a terminal 120, and the network device 110 may be a device that communicates with the terminal 120. The network device 110 provides communication coverage for a particular geographic area and communicates with the terminal 120 located within the coverage area.

FIG. 1 exemplarily shows a network device and two terminals. Optionally, the wireless communication system 100 may include a plurality of network devices, and the coverage of each network device may include other numbers of terminals, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5^{th} generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communicatio system, or the like.

The terminal in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal in the embodiments of the present disclosure may be a device that provides voice and/or data connectivity to a user, and may be used to connect a person, an object, and a machine, for example, a handheld device or a vehicle-mounted device having a wireless connection function. The terminal in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal, and the network device may also be referred to as an access network device or a radio access network device, for example, the network device may be a base station. The network device in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multistandard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology adopted by the network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the location of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal may be deployed on land, including indoor or outdoor, handheld or vehicle-mounted, may be deployed on a water surface, and may also be deployed on an aircraft, a balloon, and a satellite in the air. A scenario in which the network device and the terminal are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

With people's pursuit of rate, delay, high-speed mobility, energy efficiency, and diversity and complexity of services in future life, the 3^{rd} generation partnership project (3GPP) international standard organization starts to develop 5G. Primary application scenarios of 5G may include enhance mobile broadband (eMBB), ultra-reliable low latency communications (URLLC), and massive machine type communication (mMTC). The solutions of the embodiments of the present disclosure may be applied to any one of the above scenarios.

The eMBB service is mainly characterized in that an amount of transmitted data is large and a transmission rate is high. When transmitting data of an eMBB service, a relatively long-time scheduling unit is generally used to transmit data to improve data transmission efficiency. A typical eMBB service may include an ultra-high definition video, an augmented reality (AR), a virtual reality (VR), and the like.

The URLLC service is mainly characterized in that it requires ultra-high reliability and ultra-low delay, the amount of transmitted data is small, and it has burstiness. For example, without considering reliability, the transmission delay requirement of the URLLC service is generally within 0.5 ms. On the premise that the reliability requirement reaches 99.999%, the transmission delay requirement of the URLLC service is within 1 ms. Since the URLLC service has burstiness and randomness, the URLLC service may not generate a data packet for a long period of time or may generate a plurality of data packets in a very short time, and these data packets are small packets (e.g., data packets with a size of 50 bytes) in most cases. Typical URLLC services may include wireless control in an industrial manufacturing or production process, motion control for autonomous vehicles or drones, and tactile interaction applications such as remote repair and remote surgery.

Typical characteristics of mMTC may include high connection density, small data volume, delay-insensitive services, low cost and long service life of the module, etc. This scenario is mainly for Internet of Things services, which places extremely high demands on network access capabilities.

Currently, three RRC states of a terminal are defined in the protocol, i.e., an RRC_CONNECTED state, an RRC_IDLE state, and an RRC_INACTIVE state.

The RRC_CONNECTED state may refer to a state in which the terminal does not perform RRC release after completing the random access procedure. There is an RRC connection between the terminal and a network device (e.g., an access network device). In the RRC_CONNECTED state, the terminal may perform data transmission, e.g., downlink data transmission and/or uplink data transmission, with the network device. Alternatively, the terminal may also perform terminal-specific data channel and/or control channel transmission with the network device, to transmit specific information or unicast information of the terminal.

The RRC_IDLE state refers to a state in which the terminal resides in the cell but does not perform random access. The terminal usually enters the RRC_IDLE state after power-on or after RRC release. In the RRC_IDLE state, there is no RRC connection between the terminal and the network device (e.g., a resident network device), the network device does not store the context of the terminal, and no connection is established between the network device and the core network for the terminal. If the terminal needs to enter the RRC_CONNECTED state from the RRC_IDLE state, the RRC connection establishment procedure needs to be initiated.

The RRC_INACTIVE state is a state newly introduced from an energy saving angle in order to reduce air interface signaling, quickly resume wireless connection and quickly recover data traffic. The RRC_INACTIVE state is a state between a connected state and an idle state. The terminal has previously entered the RRC_CONNECTED state, and then releases the RRC connection, the radio bearer, and the radio resource with the network device, but the network device saves the context of the terminal for quick recovery of the RRC connection. In addition, the connection established between the network device and the core network for the terminal is not released, meaning that the user plane bearer and the control plane bearer between the RAN and the CN are still maintained, i.e., there is a CN-NR connection.

The terminal may switch among the above three RRC states. For example, the terminal may enter the RRC_INACTIVE state from the RRC_CONNECTED state to suspend its session if no data is transmitted for a period of time, and may enter the RRC_CONNECTED state from the RRC_INACTIVE state when there is a session transmission requirement. In addition, the terminal may enter the RRC_IDLE state from the RRC_INACTIVE state or the RRC_CONNECTED state.

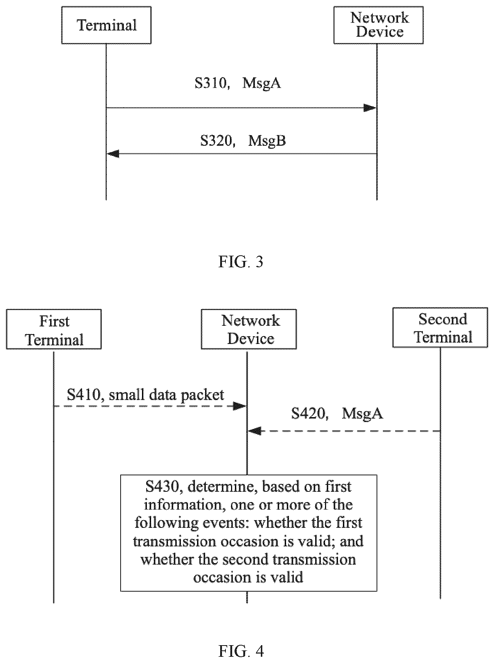

The terminal in the RRC_IDLE state and the RRC_INACTIVE state may enter the RRC_CONNECTED state through random access. There are two ways of random access, i.e., four-step random access and two-step random access. The four-step random access may also be referred to as contention-based random access. The two-step random access may also be referred to as non-contention based random access. A four-step random access procedure and a two-step random access procedure are described below with reference to FIG. 2 and FIG. 3.

Referring to FIG. 2, at operation S210, the terminal transmits a message 1 (Msg1) in a random access procedure to the network device. The Msg1 includes a preamble.

The terminal may select a random access channel (RACH) resource and the preamble and transmit the selected preamble on the selected resource. The RACH resource may also be referred to as a physical random access channel (PRACH) resource.

The network device may transmit configuration information of the RACH to the terminal through broadcasting. The configuration information of the RACH may include configuration information of a time-frequency resource of the RACH and configuration information of a start preamble root sequence.

Configuration information of a time domain resource of the RACH may be indicated by one RACH configuration index. The RACH configuration index may include one or more of a repetition period of a RACH resource, a number of RACH occasions (RO) included in one RACH resource repetition period, and a duration of each RO. Configuration information of a frequency domain resource of the RACH may include one RACH start frequency domain resource index and a number of RACH resources that can be frequency division multiplexed at the same moment (i.e., a number of consecutive RACH frequency domain resources). A continuous range of frequency domain resources may be determined through the configuration information of the RACH frequency domain resource. The start preamble root sequence may be broadcast by a cell, and each cell may broadcast one preamble root sequence. Based on the configured start preamble root sequence, a preamble set available in this cell may be obtained through cyclic shift.

At operation S220, the network device transmits a Msg2 to the terminal, and the Msg2 may also be referred to as a random access response (RAR). The Msg2 may be carried by a physical downlink control channel (PDCCH).

After transmitting the Msg1, the terminal may start a random access response time window and monitor a PDCCH scrambled by a random access-radio network temporary identifier (RA-RNTI) in the time window.

The Msg2 may further include a preamble transmitted by the terminal, and the terminal may consider that the random access response is successfully received if the terminal receives the PDCCH scrambled by the RA-RNTI and the Msg2 includes the preamble transmitted by the terminal.

After successfully receiving the PDCCH, the terminal can obtain a physical downlink shared channel (PDSCH) scheduled by the PDCCH. The PDSCH includes the RAR. The RAR may include an uplink grant (UL grant) and is used to schedule an uplink resource indication of Msg3.

At operation S230, the terminal transmits a Msg3 to the network device. The terminal may transmit the Msg3 on the uplink grant scheduled by the network device. The Msg3 may also be referred to as a radio resource control (RRC) connection establishment request message.

At operation S240, the network device transmits a Msg4 to the terminal.

The Msg4 has two functions, one is for contention conflict resolution, and the other is transmitting an RRC configuration message to the terminal. If the terminal carries the C-RNTI in the Msg3, Msg4 uses the PDCCH scrambled by the C-RNTI for scheduling, and accordingly, the terminal may decode the PDCCH by using the C-RNTI in the Msg3 to obtain the Msg4. If the terminal does not carry the C-RNTI in the Msg3, such as during initial access, the Msg4 may use the PDCCH scrambled by a temporary C-RNTI for scheduling, and accordingly, the terminal may decode the PDCCH by using the temporary C-RNTI in the Msg2 to obtain the Msg4. After decoding the PDCCH successfully, the terminal obtains the PDSCH carrying the Msg4. The terminal may compare a common control channel (CCCH) service data unit (SDU) in the PDSCH with a CCCH SDU in the Msg3, and it indicates that contention resolution succeeds if they are the same.

FIG. 3 is a flowchart of a two-step random access procedure according to an embodiment of the present disclosure. The method includes operations S310 to S330.

At operation S310, the network device transmits preamble configuration information to the terminal. The configuration information includes a preamble and a RACH resource that are required in the random access procedure.

At operation S320, the terminal transmits a MsgA to the network device based on the preamble configuration information, i.e., the terminal may transmit the preamble to the network device on the RACH resource. The MsgA may also be referred to as a MsgA physical uplink shared channel (PUSCH).

In some embodiments, the MsgA in the two-step random access procedure is equivalent to the Msg1 and Msg3 in the four-step random access procedure.

At operation S330, the network device transmits a MsgB to the terminal. The MsgB may include an RAR. After the terminal receives the RAR, it indicates that the random access procedure ends.

In some embodiments, the MsgB in the two-step random access procedure is equivalent to the Msg2 and Msg4 in the four-step random access procedure.

After the two-step random access technology is introduced, the terminal may operate in a mode in which only four-step random access (4-step RACH) is configured, or may work in a mode in which only two-step random access (2-step RACH) is configured, or may work in a mode in which both the 4-step RACH and 2-step RACH are configured.

The terminal being only configured with the 4-step RACH indicates that the terminal can only initiate random access based on the 4-step RACH configuration. The terminal being only configured with the 2-step RACH indicates that the terminal device can only initiate random access based on the 2-step RACH configuration.

For a terminal configured with both the 4-step RACH and the 2-step RACH, the terminal can initiate random access based on either the 4-step RACH configuration or the 2-step RACH configuration. In addition, since the terminal can only maintain one random access procedure at a moment, the terminal needs to select one random access procedure from the 4-step RACH and the 2-step RACH for access. In some embodiments, if a reference signal receiving power (RSRP) measured by the terminal is higher than a set threshold in the contention-based random access procedure, or if the terminal configures a dedicated non-contention-based random access resource based on the 2-step RACH for a random access triggered by RRC reconfiguration, the terminal may select the 2-step RACH. For other cases, the terminal may select the 4-step RACH.

In a wireless communication system, the network device may broadcast a synchronization signal in a plurality of directional beams, such as one or more of a primary synchronization signal (PSS), a secondary synchronization signal (SSS), an extended synchronization signal (ESS), a beam reference signal (BRS), and system information. In addition, the network device may further transmit another reference signal, e.g., a channel state information reference signal (CSI-RS), through beams, so that the terminal can measure a channel between the network device and the terminal. The terminal may perform selection of an initial cell by listening to the broadcast and perform signal measurement based on one or more of the synchronization signal, the BRS, and other signals. The terminal may determine a signal strength based on the received signal and select a cell and a beam within the cell based on the signal strength to perform random access. When performing the random access, the terminal may use the same subarray and beam direction as the selected beam to transmit the random access preamble so as to initiate the random access procedure.

For a terminal with infrequent data transmission, the terminal may remain in the RRC_INACTIVE state to save power. Before Release 16 (Rel-16), the terminal in the RRC_INACTIVE state does not support data transmission, i.e., does not support transmission of mobile originated (MO) data and mobile terminated (MT) data. The MO data refers to that a transmitting end of the data is the terminal, and a transmission direction of the message is from the terminal to the network device. The MO data may also be referred to as uplink data. MT data refers to that a transmitting end of data is the network device, and a transmission direction of the message is from the network device to the terminal. MT data may also be referred to as downlink data.

When the MO data or MT data arrives, the terminal needs to resume the RRC connection, so as to enter the RRC_CONNECTED state. In the RRC_CONNECTED state, the terminal may perform MO data or MT data transmission. After the MO data or MT data transmission is completed, the terminal releases the RRC connection and returns to the RRC_INACTIVE state.

In the foregoing process, the terminal needs to switch from the RRC_INACTIVE state to the RRC_CONNECTED state, and then switch from the RRC_CONNECTED state to the RRC_INACTIVE state. Switching between different RRC states results in an increase in power consumption of the terminal. However, in some scenarios, the terminal in the RRC_INACTIVE state needs to transmit data (which may be referred to as small packet data) with small data volume and low transmission frequency. If the terminal switches to the RRC_CONNECTED state for data transmission, signaling overheads required when the terminal performs RRC state switching may be even greater than overheads required to transmit the data, resulting in unnecessary power consumption and signaling overheads.

The small data packet in the embodiments of the present disclosure may be, for example, an instant messaging message, a heartbeat packet, periodic data, or the like. The source of the small data packet is not specifically limited in the embodiments of the present disclosure. As an example, the small data packet may be data from an application (APP) of the terminal. For example, the small data packet may be data from a communication service APP (such as WhatsApp, QQ, WeChat, etc.), a heartbeat data packet from an IM, an email client, or other APPs, a push notification from various applications, and the like. As another example, the small data packet may be data from a non-terminal application. For example, the small data packet may be data (such as periodic positioning information, etc.) from a wearable device, sensor data (such as temperature information, pressure information transmitted by an industrial wireless sensor periodically or in an event triggering manner), a periodic meter reading specified in a protocol (e.g., 3GPP TS 22.891) transmitted by a smart meter and a smart meter network, and the like.

In order to reduce power consumption of the terminal, a solution of small data transmission (SDT) in the RRC_INACTIVE state is discussed in Rel-17. In this solution, the terminal does not need to switch from the RRC_INACTIVE state to the RRC_CONNECTED state for small data transmission but may perform small data transmission in the RRC_INACTIVE state. The small data transmission in the embodiments of the present disclosure may include uplink small data transmission and downlink small data transmission. The following describes mainly for the uplink small data transmission.

In the RRC_INACTIVE state, the terminal may perform the SDT according to the resource configured by the network device, that is, the terminal may transmit SDT PUSCH to the network device in the RRC_INACTIVE state. There are multiple manners for the terminal to perform the SDT, which is not specifically limited in the embodiments of the present disclosure. For example, the terminal may perform the SDT in the random access procedure. For another example, the terminal may perform the SDT based on a configured grant (CG) resource. For another example, the terminal may perform the SDT based on a pre-allocated uplink resource (PUR). The following describes these several cases separately.

Taking the random access procedure as an example, a resource for performing the SDT by the terminal in the random access procedure may be referred to as an RA-SDT resource. For the two-step random access procedure, the terminal may perform the SDT in the MsgA. Taking FIG. 3 as an example, the terminal may carry the small data packet in the MsgA. For the four-step random access procedure, the terminal may perform the SDT in the Msg3. Taking FIG. 2 as an example, the terminal may carry the small data packet in the Msg3.

The configured grant may also be referred to as uplink grant free. The configured grant may refer to that the network device activates uplink grant for the terminal once, and the terminal may always use the resource (i.e., the CG resource) specified by the activated uplink grant for uplink transmission in a case where a deactivation indication is not received. In the embodiments of the present disclosure, the terminal may use the CG resource to perform the SDT. The CG resource used for the SDT may also be referred to as a CG-SDT resource.

A type of the configured grant may be, for example, a CG type 1 or a CG type 2. Configuration parameters of the CG type 1 may be configured by the RRC through higher layer signaling. The higher layer signaling may be, for example, IE ConfiguredGrantConfig. The parameters required by the CG type 2 are also configured by IE ConfiguredGrantConfig, but resources of the CG type 2 need to be activated and deactivated by downlink control information (DCI), and only resources activated by DCI can be used.

The CG type 1 and the CG type 2 may be distinguished according to a field rrc-ConfiguredUplinkGrant in the IE ConfiguredGrantConfig. If the field rrc-ConfiguredUplinkGrant is configured, the type of the configured grant is the CG type 1. If the field rrc-ConfiguredUplinkGrant is not configured, the type of the configured grant is the CG type 2.

In some embodiments, the terminal may also use the PUR resource to perform the SDT. The PUR resource is a resource preconfigured for the terminal to transmit uplink data in a non-connected state. The PUR resource may be a periodic resource. The PUR resource may be preconfigured based on a first type of uplink grant (grant type 1). In the RRC_INACTIVE state, the terminal may use the reserved PUR resource to directly perform data transmission.

Before performing the SDT, the terminal needs to first determine whether the terminal meets a condition for triggering the SDT. Only if the condition for triggering the SDT is met, the terminal can perform the SDT. If the condition for triggering the SDT is met, the terminal may initiate an SDT procedure. If the condition for triggering the SDT is not met, the terminal may initiate an RRC resume procedure. For example, the terminal may switch from the RRC_INACTIVE state to the RRC_CONNECTED state, so as to transmit data.

The condition for triggering the SDT may include one or more of: data to be transmitted coming from a radio bearer that can trigger the SDT; a data amount of the data to be transmitted being less than a preconfigured data amount threshold (also referred to as a third preset threshold); a measurement result of a downlink reference signal receiving power (RSRP) being greater than a preconfigured RSRP threshold; and an effective SDT resource existing.

In some cases, resources for the first terminal to perform the SDT may conflict with resources for the second terminal to perform random access. For example, taking the two-step random access procedure as an example, the first terminal transmits a first small data packet on the first transmission occasion, and the second terminal transmits a MsgA in the two-step random access procedure on the second transmission occasion. If resources of the first transmission occasion at least partially overlap with resources of the second transmission occasion, i.e., the resources of the first transmission occasion conflict with the resources of the second transmission occasion, there is no explicit regulation on how the network device should process such a resource conflict.

If the resource conflict occurs, both the SDT PUSCH and the MsgA PUSCH may not be correctly decoded, which may result in reduced spectrum and energy efficiency. Taking the CG-SDT resource as an example, the CG-SDT PUSCH resource is usually configured for the terminal through dedicated signaling, and thus, other terminals performing random access are unable to identify the CG-SDT PUSCH resource, so that the conflict between the MsgA PUSCH resource and the CG-SDT PUSCH resource cannot be known. Therefore, it is required to provide a processing rule for the conflict between the MsgA PUSCH resource and the CG-SDT PUSCH resource.

Based on this, an embodiment of the present disclosure provides a method and apparatus for wireless communication, to provide a clear solution for the network device to process the resource conflict. The following describes the solutions of the embodiments of the present disclosure in detail with reference to FIG. 4.

As shown in FIG. 4, at operation S410, the first terminal transmits a small data packet to the network device on a first transmission occasion. Alternatively, the first terminal transmits the SDT PUSCH to the network device on the first transmission occasion.

In some embodiments, the first terminal transmits the small data packet to the network device when a condition for triggering the SDT is met. The condition for triggering the SDT can be referred to in the previous description and will not be repeated here.

The small data packet may have a plurality of service types, which is not specifically limited in the present disclosure. For example, the service type of the small data packet includes one or more of a URLLC service, an mMTC service, and an eMBB service.

The first transmission occasion may be understood as transmission resources. The first transmission occasion may include time domain resources and/or frequency domain resources. The resources of the first transmission occasion may also be referred to as SDT resources. The resources of the first transmission occasion may be, for example, CG-SDT resources, PUR resources or RA-SDT resources. The resources of the first transmission occasion may be configured by the network device for the first terminal, and the configuration of the resources of the first transmission occasion will be described in detail below.

It should be noted that the resources of the first transmission occasion may also be referred to as SDT PUSCH resources or first resources. The terms "resources of the first transmission occasion," "SDT PUSCH resources," and "first resources" may be used interchangeably depending on the specific context. In some embodiments, the first resources may be CG-SDT PUSCH.

It should be noted that the first terminal transmitting the small data packet to the network device in the embodiments of the present disclosure only means that the first terminal transmits the small data packet to the network device, and it does not mean that the network device has successfully received the small data packet or that the network device receives the small data packet. In some embodiments, the network device may determine whether to receive the small data packet based on whether the first transmission occasion is valid. The determination of whether the first transmission occasion is valid will be described in detail below.

At operation S420, the second terminal transmits the MsgA in the two-step random access procedure to the network device on the second transmission occasion. Alternatively, the second terminal may transmit the MsgA PUSCH to the network device on the second transmission occasion. The second terminal and the first terminal may be two different terminals.

The MsgA may include a random access preamble and uplink data. The MsgA may also be referred to as MsgA PUSCH. The second transmission occasion may be a PRACH occasion (PO). The second transmission occasion may include time domain resources and/or frequency domain resources. The resources of the second transmission occasion may be configured by the network device for the terminal. The resources of the second transmission occasion may be dedicated resources for the second terminal. The resources of the second transmission occasion may be configured for the second terminal through configured grant. In some embodiments, the network device may configure the resources of the second transmission occasion for the second terminal through RRC signaling.

It should be noted that the resources of the second transmission occasion may also be referred to as MsgA PUSCH resources or second resources. The terms "resources of the second transmission occasion," "MsgA PUSCH resources," and "second resources" may be used interchangeably depending on the specific context.

Sizes of data packets transmitted by the second terminal through MsgA PUSCH may vary under the triggering of different random access events. Therefore, the second terminal may select a matching MsgA PUSCH resource based on the size of the data packet to be transmitted. Currently, the communication system can support two different PUSCH configurations, where the time-frequency resource location and size of PUSCH may vary under different PUSCH configurations to meet different PUSCH transmission packet size requirements, so as to support the terminal in selecting a configuration that meets its needs to initiate random access.

It should be noted that the second terminal transmitting the MsgA to the network device in the embodiments of the present disclosure only means that the second terminal transmits the MsgA to the network device, and it does not mean that the network device has successfully received the MsgA or that the network device receives the MsgA. In some embodiments, the network device may determine whether to receive the MsgA based on whether the second transmission occasion is valid. The determination of whether the second transmission occasion is valid will be described in detail below.

The resources of the first transmission occasion at least partially overlap with the resources of the second transmission occasion. For convenience of description, the resources of the first transmission occasion are referred to as first resources, and the resources of the second transmission occasion are referred to as second resources. The first resources at least partially overlapping with the second resources may refer to that a part of the first resources overlap with a part of or all the second resources, or that a part of the second resources overlap with a part of or all the first resources. The resource overlapping in the embodiments of the present disclosure may refer to time-domain resource overlapping and/or frequency-domain resource overlapping.

At operation S430, the network device determines, based on the first information, one or more of the following events: whether the first transmission occasion is valid; and whether the second transmission occasion is valid.

The first transmission occasion being valid may be understood as that the first terminal is able to successfully transmit the small data packet using the first transmission occasion, or that the network device is able to receive, on the first transmission occasion, the small data packet transmitted by the first terminal, or that the network device first receives the small data packet transmitted by the first terminal on the first transmission occasion and then receives the MsgA transmitted by the second terminal on the second transmission occasion after the transmission of the small data packet is completed.

The first transmission occasion being invalid may be understood as that the first terminal cannot successfully transmit the small data packet using the first transmission occasion, or that the network device gives up receiving, on the first transmission occasion, the small data packet transmitted by the first terminal, or that the network device first receives the MsgA transmitted by the second terminal on the second transmission occasion and then receives the small data packet transmitted by the first terminal on the first transmission occasion after the transmission of MsgA is completed.

The second transmission occasion being valid may be understood as that the second terminal is able to successfully transmit MsgA using the second transmission occasion, or that the network device is able to receive, on the second transmission occasion, the MsgA transmitted by the second terminal, or that the network device first receives the MsgA transmitted by the second terminal on the second transmission occasion and then receives the small data packet transmitted by the first terminal on the first transmission occasion after the transmission of the MsgA is completed.

The second transmission occasion being invalid may be understood as that the second terminal cannot successfully transmit the MsgA using the second transmission occasion, or that the network device gives up receiving, on the second transmission occasion, the MsgA transmitted by the second terminal on the second transmission occasion, or that the network device first receives the MsgA transmitted by the second terminal on the second transmission occasion and then receives the small data packet transmitted by the first terminal on the first transmission occasion.

In some embodiments, the network device may determine whether the first transmission occasion is valid based on the first information. If the first transmission occasion is valid, the network device may directly determine that the second transmission occasion is invalid. If the first transmission occasion is invalid, the network device may directly determine that the second transmission occasion is valid.

In some embodiments, the network device may determine whether the second transmission occasion is valid based on the first information. If the second transmission occasion is valid, the network device may directly determine that the first transmission occasion is invalid. If the second transmission occasion is invalid, the network device may directly determine that the first transmission occasion is valid.

Of course, the network device may also determine whether the first transmission occasion is valid and whether the second transmission occasion is valid based on the first information.

If the first transmission occasion is valid and the second transmission occasion is invalid, the network device may only receive the first small data packet and give up receiving the MsgA. If the first transmission occasion is invalid and the second transmission occasion is valid, the network device may only receive the MsgA and give up receiving the first small data packet.

The first information may include one or more of: a service type of the small data packet; a trigger condition for triggering two-step random access; and a number of retransmissions for the small data packet.

The service type of the small data packet may include one or more of a URLLC service, an mMTC service, an eMBB service.

Embodiments of the present disclosure may set a service type with a priority higher than that of MsgA and/or a service type with a priority lower than that of MsgA, so as to determine whether the first transmission occasion or the second transmission occasion is valid based on the service type.

As an example, a priority of the mMTC service is higher than the priority of MsgA. If the service type of the small data packet is the mMTC service, the network device may determine that the first transmission occasion is valid and/or the second transmission occasion is invalid. Since the mMTC service is mainly used in IoT scenarios and there are a lot of small data packets in the mMTC service, setting the priority of the mMTC service higher than that of MsgA allows timely transmission of mMTC service data, reduces the number of data retransmissions, and improves user experience.

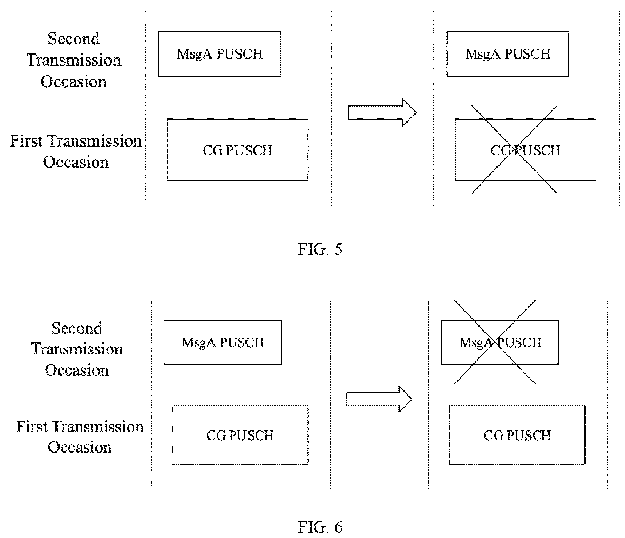

As another example, the priority of the eMBB service is lower than the priority of MsgA. If the service type of the first small data packet is the eMBB service, the network device may determine that the first transmission occasion is invalid and/or the second transmission occasion is valid, as shown in FIG. 5. Since the eMBB service is mainly aimed at high traffic mobile broadband services, the number of data packets is generally less or the importance of the data packets is relatively low, so the priority of the eMBB service may be set lower than the priority of MsgA, allowing the second terminal to perform the random access successfully as soon as possible.

As another example, a priority of the URLLC service is higher than the priority of MsgA. If the service type of the small data packet is the URLLC service, the network device may determine that the first transmission occasion is valid and/or the second transmission occasion is invalid, as shown in FIG. 6. Since the URLLC service is generally a low-latency service, it is advantageous to prioritize the transmission of the data packet of the URLLC service to meet the latency requirements. Of course, in some implementations, the priority of the URLLC service may also be lower than the priority of MsgA. If the service type of the small data packet is the URLLC service, the network device may determine that the first transmission occasion is invalid and/or the second transmission occasion is valid.

The first information may include a trigger condition for triggering two-step random access. The trigger condition for triggering two-step random access may include multiple conditions, such as the trigger condition may include one or more of: initial access; RRC re-establishment; cell handover; downlink (DL) or uplink (UL) data in RRC_CONNECTED arriving when a UL synchronization state is "out of sync"; access from RRC_INACTIVE; secondary node (SN) establishment; requesting other system information (SI); beam failure recovery; and scheduling request (SR) failure. Other SI may include system information other than a master information block (MIB) and a system information block 1 (SIB1) in the system information.

In some embodiments, a first trigger condition may be set. When the trigger condition for triggering two-step random access is the first trigger condition, it is determined that the first transmission occasion is invalid and/or the second transmission occasion is valid. The first trigger condition may include one or more of: requesting other SI access; beam failure recovery; and SR failure.

Of course, in some embodiments, a second trigger condition may also be set. When the trigger condition for triggering two-step random access is the second trigger condition, it is determined that the first transmission occasion is valid and/or the second transmission occasion is invalid. The second trigger condition may include one or more of: initial access; RRC re-establishment; cell handover; DL or UL data in RRC_CONNECTED arriving when the UL synchronization state is "out of sync"; access from RRC_INACTIVE; and SN establishment.

The first information may include the number of retransmissions for the small data packet. If the number of retransmissions for the small data packet exceeds a preset threshold, the network device may determine that the first transmission occasion is invalid or the second transmission occasion is valid. When the number of retransmissions for the small data packet exceeds the preset threshold, the network device may give up receiving the small data packet and receive the MsgA, thereby avoiding the problem that unlimited retransmissions for the small data packet prevents the successful random access of the second terminal.

The above-mentioned first information may be implemented separately or in combination, which is not specifically limited in the embodiments of the present disclosure.

In some embodiments, if the first information meets the first condition, the first transmission occasion is valid or the second transmission occasion is invalid. The first condition includes one or more of: the service type of the small data packet being the URLLC service; the service type of the small data packet being the mMTC service; the trigger condition for triggering two-step random access not including beam failure recovery; the trigger condition for triggering two-step random access not including SR failure; and the trigger condition for triggering two-step random access not including requesting SI.

In some embodiments, if the first information meets the second condition, the first transmission occasion is invalid or the second transmission occasion is valid. The second condition includes one or more of: the service type of the small data packet being the eMBB business; the service type of the small data packet being the URLLC service; the trigger condition for triggering two-step random access including beam failure recovery; the trigger condition for triggering two-step random access including SR failure; the trigger condition for triggering two-step random access including requesting other SI; and the number of retransmissions for the small data packet being higher than a preset threshold.

As an example, if the service type of the small data packet is the URLLC service, whether the first transmission occasion is valid or whether the second transmission occasion is valid is determined based on the trigger condition for the second terminal to perform two-step random access. If the trigger condition for triggering two-step random access includes the above-mentioned first trigger condition, the first transmission occasion is invalid or the second transmission occasion is valid. The network device may give up transmitting the small data packet and transmit the MsgA PUSCH. If the trigger condition for triggering two-step random access do not include the above-mentioned first trigger condition, the first transmission occasion is valid or the second transmission occasion is invalid. The network device may transmit the small data packet and give up transmitting the MsgA PUSCH.

As another example, if the service type of the small data packet is the mMTC service, the network device may first transmit the small data packet and wait for MsgA PUSCH. However, when the number of retransmissions for the small data packet exceeds a preset threshold, the network device may give up transmitting the small data packet and transmit MsgA PUSCH.

The service type of the small data packet may be determined based on the first resource. In the embodiments of the present disclosure, different resource pools may be configured for different services. The network device may determine the service type of the small data packet based on a resource pool to which the first resource belongs.

For example, the service type of the small data packet may include a plurality service types respectively corresponding to a plurality of resource pools. Each resource pool in the plurality of resource pools is used to transmit a small data packet of a service type corresponding to resource pool. The first terminal may select resources from the resource pool that matches the service type of the small data packet to be transmitted.

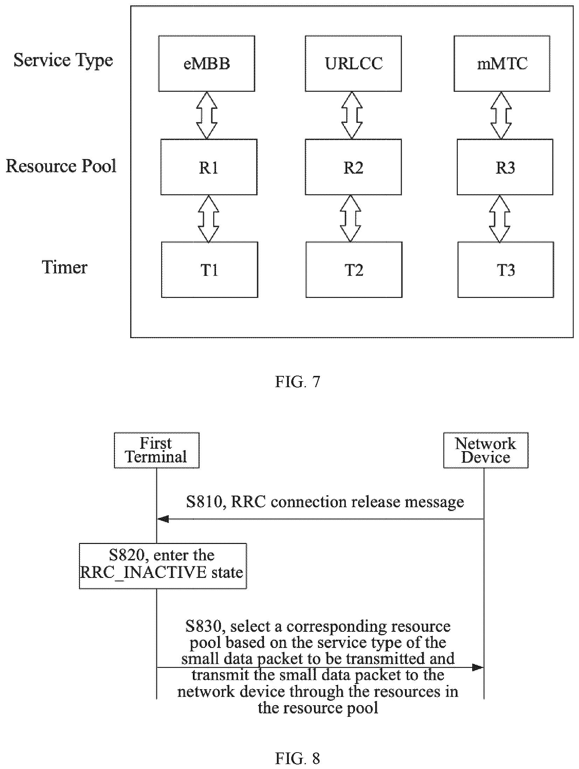

For example, the service type of the small data packet may include the eMBB service, the URLLC service, and the mMTC service. As shown in FIG. 7, a resource pool corresponding to the eMBB service is R1, a resource pool corresponding to the URLLC service is R2, and a resource pool corresponding to the mMTC service is R3. If the small data packet to be transmitted by the first terminal belongs to the eMBB service, the first terminal may select resources from the resource pool R1 to transmit the small data packet. If the small data packet to be transmitted by the first terminal belongs to the URLLC service, the first terminal may select resources from the resource pool R2 to transmit the small data packet. If the small data packet to be transmitted by the first terminal belongs to the mMTC service, the first terminal may select resources from the resource pool R3 to transmit the small data packet.

In some embodiments, sizes of the resource pools corresponding to different services may be equal or unequal, which is not specifically limited in the embodiments of the present disclosure. For example, in the embodiments of the present disclosure, the resource pools may be differentially configured based on the numbers of data packets of different service types, which can balance the transmission of data packets of different services and enable rational configuration of resources.

For example, a size of a resource pool corresponding to the URLLC service is greater than a size of a resource pool corresponding to the mMTC service; the size of the resource pool corresponding to the mMTC service is greater than a size of a resource pool corresponding to the eMBB service; and the size of the resource pool corresponding to the URLLC service is greater than the size of the resource pool corresponding to the eMBB service. Since the URLLC service requires low latency, allocating more resources to the URLLC service enables timely transmission of the the URLLC service and helps meet the latency requirements.

The plurality of resource pools mentioned above may be configured by the network device for the first terminal or may be predefined. In some embodiments, the network device may configure a plurality of resource pools for the terminal through a RRC connection release message.

Taking FIG. 8 as an example, at operation S810, the network device transmits an RRC connection release message to the first terminal. The RRC connection release message may include configuration information for three resource pools.

At operation S820, the first terminal enters the RRC_INACTIVE state after receiving the RRC connection release message.

At operation S830, when the first terminal needs to transmit a small data packet, the first terminal may select a corresponding resource pool based on the service type of the small data packet to be transmitted and transmit the small data packet to the network device through the resources in the resource pool.

The plurality of resource pools mentioned above may correspond to a plurality of timers, i.e., the plurality of timers may be respectively configured for the plurality of resource pools in the embodiments of the present disclosure. The plurality of timers are used to define durations in which resources in the plurality of resource pools are used to transmit small data packets of corresponding service types. In other words, the plurality of resource pools include a first resource pool, and a timer corresponding to the first resource pool is used to define a duration in which resources in the first resource pool are used to transmit a small data packet of a service type corresponding to the first resource pool. The first terminal may use the resources in the first resource pool to transmit the small data packet within the duration of the timer corresponding to the first resource pool.

Taking the first resource being the CG-SDT resource as an example, parameters of the plurality of timers may be indicated by CG-SDT resource configuration information.

The CG-SDT resource configuration information may include relevant information for SDT. For example, the CG-SDT resource configuration information may include one or more of: one or more periodic time-frequency resources, a modulation and coding scheme (MCS), a transport block size (TBS), repetition of a plurality of physical uplink shared channel (PUSCH), a starting position, a cell radio network temporary identity (C-RNTI) (e.g., CG-SDT C-RNTI), a timing advance (TA) verification criteria, allowed CG-SDT resource hopping, whether the CG-SDT resource configuration being for one or more occasions, demodulation reference signal (DMRS) configuration, power control parameters, physical downlink control channel (PDCCH) search space, multiple repetitions of coverage enhancement (CE) being effective and other related parameters, and other related parameters of the plurality of timers.

As shown in FIG. 7, a timer corresponding to a resource pool of the eMBB service is T1, a timer corresponding to a resource pool of the URLLC service is T2, and a timer corresponding to a resource pool of the mMTC service is T3. The timer T1 is used to define a duration of a resource pool R1 for transmitting the eMBB service. The timer T2 is used to define a duration of a resource pool R2 for transmitting the URLLC service. The timer T3 is used to define a duration of a resource pool R3 for transmitting the mMTC service.

During a validity period of the timer T1, resources in the resource pool R1 may be used for transmitting the small data packet of the eMBB service. After the timer T1 expires, the resources in resource pool R1 cannot be used for transmitting the small data packet of the eMBB service. In other words, after the timer T1 expires, the first terminal cannot transmit the small data packet of the eMBB service.

During a validity period of timer T2, resources in the resource pool R2 may be used for transmitting the small data packet of the URLLC service. After the timer T2 expires, the resources in the resource pool R2 cannot be used for transmitting the small data packet of the URLLC service. In other words, after timer T2 expires, the first terminal cannot transmit the small data packet of the URLLC service.

During a validity period of timer T3, resources in the resource pool R3 may be used for transmitting the small data packet of the mMTC service. After the timer T3 expires, the resources in the resource pool R3 cannot be used for transmitting the small data packet of the mMTC service. In other words, after timer T3 expires, the first terminal cannot transmit the small data packet of the mMTC service.

The durations of the plurality of timers corresponding to the plurality of resource pools may be equal or unequal, which is not specifically limited in the embodiments of the present disclosure. In some embodiments, a duration of a timer corresponding to a resource pool of the URLLC service is greater than a duration of a timer corresponding to a resource pool of the mMTC service; the duration of the timer corresponding to the resource pool of the mMTC service is greater than a duration of a timer corresponding to a resource pool of the eMBB service; and the duration of the timer corresponding to the resource pool of the URLLC service is greater than the duration of the timer corresponding to the resource pool oif the eMBB service.

In some embodiments, the duration of the timer may be determined based on the distribution of different types of services. For example, a larger timer may be set for a service type with a larger number of data packets, while a smaller timer may be set for a service type with a smaller number of data packets.

For example, assuming that the plurality of service types include a first service and a second service, the first service corresponds to a first resource pool, the second service corresponds to a second resource pool, the first resource pool corresponds to a first timer, and the second resource pool corresponds to a second timer. If the number of data packets of the second service is greater than the number of data packets of the first service, the duration of the second timer may be greater than the duration of the first timer, so that the data packets of the second service can be transmitted more.

In some embodiments, if a timer corresponding to a resource pool expires, the resources in the resource pool may be used for data transmission of other service types. Taking the first service and the second service as an example, if the duration of the first timer is less than the duration of the second timer, he resources in the first resource pool may be used for transmitting data packets of the second service after the first timer expires.

For example, taking timers T1, T2, and T3 as an example, assuming T2 > T3 > T1, the resources in the resource pool R1 may be shared by the mMTC service and the URLLC service after the timer T1 expires. In other words, the first terminal may use the resources in the resource pool R1 to transmit small data packets of the mMTC service and URLLC service after the timer T1 expires.

The following uses the eMBB service, the URLLC service, and the mMTC service as an example to describe a transmission process of data packets of different services with reference to FIG. 7 and FIG. 8.

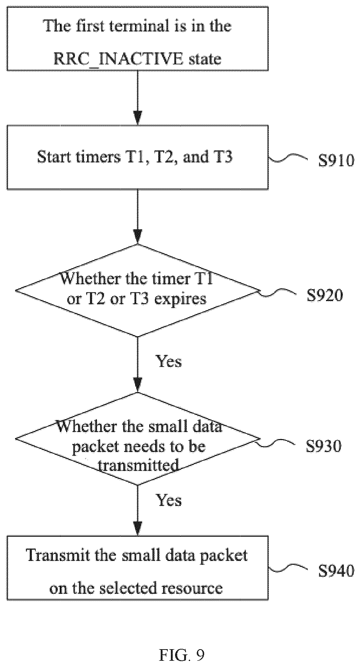

FIG. 9 shows a case where the durations of the three timers are equal. Referring to FIG. 9, at operation S910, the first terminal is in the RRC_INACTIVE state and may start timers T1, T2, and T3.

At operation S920, the first terminal determines whether the timer T1 or T2 or T3 expires.

At operation S930, within the validity period of the timer T1 or T2 or T3, the first terminal determines whether the small data packet needs to be transmitted.

At operation S940, if the first terminal needs to transmit the small data packet, the first terminal selects a resource in a resource pool corresponding to the small data packet to be transmitted and transmits the small data packet on the resource.

If the timer T1 or T2 or T3 expires, the first terminal releases the resource in the resource pool, and the first terminal cannot transmit the small data packet.

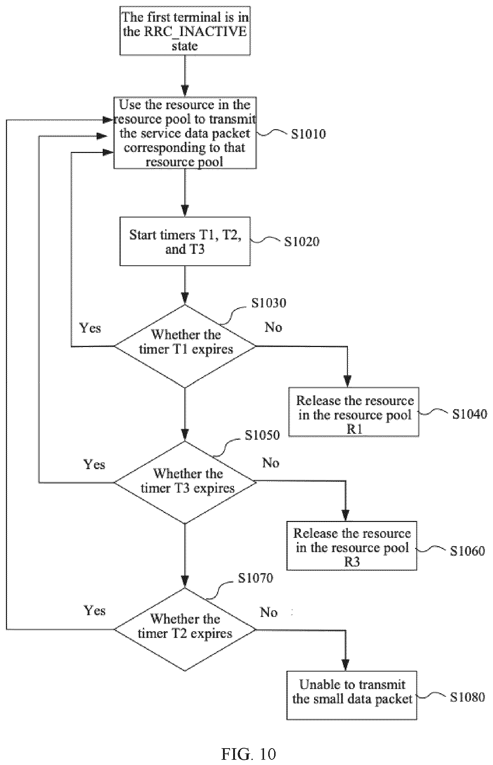

FIG. 10 shows a case where the durations of the three timers are not equal. Referring to FIG. 10, at operation S1010, the first terminal is in the RRC_INACTIVE state and may use the resource in the resource pool to transmit the service data packet corresponding to that resource pool.

At operation S1020, the first terminal starts the timer corresponding to each resource pool, i.e., timers T1, T2, and T3.

At operation S1030, the first terminal determines whether the timer T1 expires. If the timer T1 does not expire, the first terminal may use the resource in the resource pool R1 to transmit the small data packet of the eMBB service.

At operation S1040, if the timer T1 expires, the first terminal may release the resource in the resource pool R1. In some embodiments, the first terminal may release the resource in the resource pool R1 to a shared resource pool, making the resource in the resource pool R1 available for transmitting the small data packet of the URLLC service and the mMTC service.

At operation S1050, the first terminal determines whether the timer T3 expires. If the timer T3 expires, the first terminal may use the resource in the resource pool R3 to transmit the small data packet of the mMTC service.

At operation S1060, if the timer T3 expires, the first terminal may release the resource in the resource pool R3. In some embodiments, the first terminal may release the resource in the resource pool R3 to a shared resource pool, making the resource in the resource pool R3 available for transmitting the small data packet of the URLLC service.

At operation S1070, the first terminal determines whether the timer T2 expires. If the timer T2 does not expire, the first terminal may use the resource in the resource pool R2 to transmit the small data packet for the URLLC service.

At operation S1080, if the timer T2 expires, the first terminal may release the resource in the resource pool R2. Additionally, the first terminal will be unable to transmit the small data packet, i.e., the first terminal will be unable to transmit the small data packet of any service type.

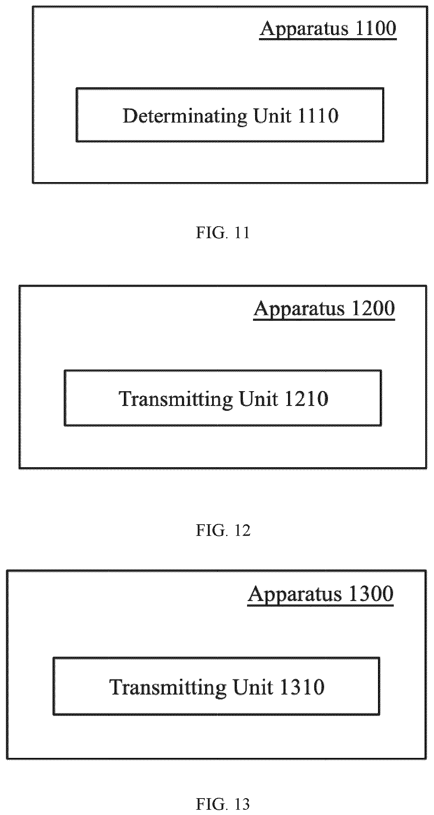

The method embodiments of the present disclosure are described in detail above with reference to FIG. 1 to FIG. 10, and the apparatus embodiments of the present disclosure are described in detail below with reference to FIG. 11 to FIG. 14. It should be understood that descriptions of the method embodiments correspond to descriptions of the apparatus embodiments, and therefore, reference may be made to the foregoing method embodiments for parts that are not described in detail.

FIG. 11 is a schematic structural diagram of an apparatus for wireless communication provided in an embodiment of the present disclosure. The apparatus may be a network device. The network device shown in FIG. 11 can be any one of the network devices described above. The network device 1100 includes a determining unit 1110.

The determining unit 1110 is configured to determine, based on first information, one or more of the following events: whether a first transmission occasion for a first terminal to transmit a small data packet is valid; and a second terminal to transmit a message A in a two-step random access procedure is valid. Resources of the second transmission occasion at least partially overlap with resources of the first transmission occasion.

The first information includes one or more of: a service type of the small data packet; a trigger condition for triggering two-step random access; and a number of retransmissions for the small data packet.

In some embodiments, if the first information meets a first condition, the first transmission occasion is valid or the second transmission occasion is invalid. The first condition includes one or more of: the service type of the small data packet being a URLLC service; the service type of the small data packet being an mMTC service; the trigger condition for triggering the two-step random access not including beam failure recovery; the trigger condition for triggering the two-step random access not including SR failure; and the trigger condition for triggering the two-step random access not including requesting other SI.

In some embodiments, if the first information meets a second condition, the first transmission occasion is invalid or the second transmission occasion is valid. The second condition includes one or more of: the service type of the small data packet being an eMBB service; the service type of the small data packet being the URLLC service; the trigger condition for triggering the two-step random access including beam failure recovery; the trigger condition for triggering the two-step random access including SR failure; the trigger condition for triggering the two-step random access including requesting other SI; and the number of retransmissions for the small data packet being higher than a preset threshold.

In some embodiments, the service type of the small data packet is determined based on the resources of the first transmission occasion.

In some embodiments, the service type of the small data packet includes a plurality of service types, and the plurality of service types respectively correspond to a plurality of resource pools, and resources in each resource pool of the plurality of resource pools are used to transmit a small data packet corresponding to a service type corresponding to the resource pool.

In some embodiments, a size of a resource pool corresponding to the URLLC service is greater than a size of a resource pool corresponding to the mMTC service; the size of the resource pool corresponding to the mMTC service is greater than a size of a resource pool corresponding to the eMBB service; and the size of the resource pool corresponding to the URLLC service is greater than the size of the resource pool corresponding to the eMBB service.

In some embodiments, the plurality of resource pools respectively correspond to a plurality of timers, and the plurality of timers are respectively configured to define durations in which the resources in the plurality of resource pools are used to transmit small data packets of corresponding service types.

In some embodiments, durations of the plurality of timers are equal.

In some embodiments, durations of the plurality of timers are not equal.

In some embodiments, the plurality of service types include a first service and a second service, the first service corresponds to a first resource pool, the second service corresponds to a second resource pool, the first resource pool corresponds to a first timer, and the second resource pool corresponds to a second timer; and if a duration of the first timer is less than a duration of the second timer, resources in the first resource pool are used for transmission of a small data packet of the second service after the first timer expires.

In some embodiments, a duration of a timer corresponding to a resource pool of the URLLC service is greater than a duration of a timer corresponding to a resource pool of the mMTC service; the duration of the timer corresponding to the resource pool of the mMTC service is greater than a duration of a timer corresponding to a resource pool of the eMBB service; and the duration of the timer corresponding to the resource pool of the URLLC service is greater than the duration of the timer corresponding to the resource pool of the eMBB service.

In some embodiments, the resources of the first transmission occasion are CG-SDT resources.

FIG. 12 is a schematic diagram of an apparatus for wireless communication provided in an embodiment of the present disclosure. The apparatus may be a first terminal. The first terminal shown in FIG. 12 may be any one of the first terminals described above. The first terminal 1200 includes a transmitting unit 1210.

The transmitting unit 1210 is configured to transmit a small data packet to a network device on a first transmission occasion. Resources of the first transmission occasion at least partially overlap with resources of a second transmission occasion. The second transmission occasion is used for a second terminal to transmit a message A in a two-step random access procedure to the network device.

Whether the first transmission occasion or the second transmission occasion is valid is determined based on first information. The first information includes one or more of: a service type of the small data packet; a trigger condition for triggering two-step random access; and a number of retransmissions for the small data packet.

In some embodiments, if the first information meets a first condition, the first transmission occasion is valid or the second transmission occasion is invalid. The first condition includes one or more of: the service type of the small data packet being a URLLC service; the service type of the small data packet being an mMTC service; the trigger condition for triggering the two-step random access not including beam failure recovery; the trigger condition for triggering the two-step random access not including SR failure; and the trigger condition for triggering the two-step random access not including requesting other SI.

In some embodiments, if the first information meets a second condition, the first transmission occasion is invalid or the second transmission occasion is valid. The second condition includes one or more of: the service type of the small data packet being the eMBB service; the service type of the small data packet being the URLLC service; the trigger condition for triggering the two-step random access including beam failure recovery; the trigger condition for triggering the two-step random access including SR failure; the trigger condition for triggering the two-step random access including requesting other SI; and the number of retransmissions for the small data packet being higher than a preset thresholdd.

In some embodiments, the service type of the small data packet is determined based on the resources of the first transmission occasion.

In some embodiments, the service type of the small data packet includes a plurality of service types, the plurality of service types respectively correspond to a plurality of resource pools, and resources in each resource pool of the plurality of resource pools are used to transmit a small data packet of a service type corresponding to the resource pool.

In some embodiments, a size of a resource pool corresponding to the URLLC service is greater than a size of a resource pool corresponding to the mMTC service; the size of the resource pool corresponding to the mMTC service is greater than a size of a resource pool corresponding to the eMBB service; and the size of the resource pool corresponding to the URLLC service is greater than the size of the resource pool corresponding to the eMBB service.

In some embodiments, the plurality of resource pools respectively correspond to a plurality of timers, and the plurality of timers are respectively configured to define durations in which the resources in the plurality of resource pools are used to transmit small data packets of corresponding service types.

In some embodiments, durations of the plurality of timers are equal.

In some embodiments, durations of the plurality of timers are not equal.

In some embodiments, the plurality of service types include a first service and a second service, the first service corresponds to a first resource pool, the second service corresponds to a second resource pool, the first resource pool corresponds to a first timer, and the second resource pool corresponds to a second timer; and if a duration of the first timer is less than a duration of the second timer, resources in the first resource pool are used for transmission of a small data packet of the second service after the first timer expires.

In some embodiments, a duration of a timer corresponding to a resource pool of the URLLC service is greater than a duration of a timer corresponding to a resource pool of the mMTC service; the duration of the timer corresponding to the resource pool of the mMTC service is greater than a duration of a timer corresponding to a resource pool of the eMBB service; and the duration of the timer corresponding to the resource pool of the URLLC service is greater than the duration of the timer corresponding to the resource pool of the eMBB service.

In some embodiments, the resources of the first transmission occasion are CG-SDT resources.

FIG. 13 is a schematic structural diagram of an apparatus for wireless communication provided in an embodiment of the present disclosure. The apparatus may be a second terminal. The second terminal shown in FIG. 13 may be any one of the second terminals described above. The second terminal 1300 includes a transmitting unit 1310.

The transmitting unit 1310 is configured to transmit a message A in a two-step random access procedure to a network device on a second transmission occasion. Resources of the second transmission occasion at least partially overlap with resources of a first transmission occasion; wherein the first transmission occasion is used for a first terminal to transmit a small data packet to the network device.

Whether the first transmission occasion or the second transmission occasion is valid is determined based on first information. The first information includes one or more of: a service type of the small data packet; a trigger condition for triggering two-step random access; and a number of retransmissions for the small data packet.

In some embodiments, if the first information meets a first condition, the first transmission occasion is valid or the second transmission occasion is invalid. The first condition includes one or more of: the service type of the small data packet being the URLLC service; the service type of the small data packet being the mMTC service; the trigger condition for triggering the two-step random access not including beam failure recovery; the trigger condition for triggering the two-step random access not including SR failure; and the trigger condition for triggering the two-step random access not including requesting other SI.

In some embodiments, if the first information meets a second condition, the first transmission occasion is invalid or the second transmission occasion is valid. The second condition includes one or more of: the service type of the small data packet being the eMBB service; the service type of the small data packet being the URLLC service; the trigger condition for triggering the two-step random access including beam failure recovery; the trigger condition for triggering the two-step random access including SR failure; the trigger condition for triggering the two-step random access including requesting other SI; and the number of retransmissions for the small data packet being higher than a preset threshold.

In some embodiments, the service type of the small data packet is determined based on the resources of the first transmission occasion.

In some embodiments, the service type of the small data packet includes a plurality of service types, the plurality of service types respectively correspond to a plurality of resource pools, and resources in each resource pool of the plurality of resource pools are used to transmit a small data packet of a service type corresponding to the resource pool.

In some embodiments, a size of a resource pool corresponding to the URLLC service is greater than a size of a resource pool corresponding to the mMTC service; the size of the resource pool corresponding to the mMTC service is greater than a size of a resource pool corresponding to the eMBB service; and the size of the resource pool corresponding to the URLLC service is greater than the size of the resource pool corresponding to the eMBB service.

In some embodiments, the plurality of resource pools respectively correspond to a plurality of timers, and the plurality of timers are respectively configured to define durations in which the resources in the plurality of resource pools are used to transmit small data packets of corresponding service types.

In some embodiments, durations of the plurality of timers are equal.

In some embodiments, durations of the plurality of timers are not equal.

In some embodiments, the plurality of service types include a first service and a second service, the first service corresponds to a first resource pool, the second service corresponds to a second resource pool, the first resource pool corresponds to a first timer, and the second resource pool corresponds to a second timer; and if a duration of the first timer is less than a duration of the second timer, resources in the first resource pool are used for transmission of a small data packet of the second service after the first timer expires.

In some embodiments, a duration of a timer corresponding to a resource pool of the URLLC service is greater than a duration of a timer corresponding to a resource pool of the mMTC service; the duration of the timer corresponding to the resource pool of the mMTC service is greater than a duration of a timer corresponding to a resource pool of the eMBB service; and the duration of the timer corresponding to the resource pool of the URLLC service is greater than the duration of the timer corresponding to the resource pool of the eMBB service.

In some embodiments, the resources of the first transmission occasion are CG-SDT resources.

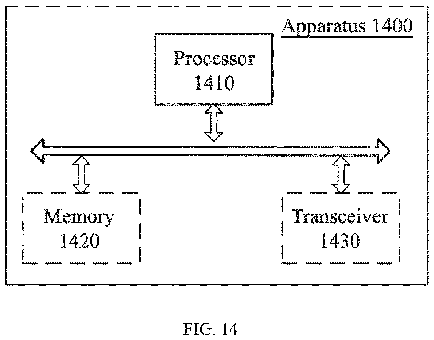

FIG. 14 is a schematic structural diagram of an apparatus according to an embodiment of the present disclosure. The dashed line in FIG. 14 indicates that the unit or module is optional. The apparatus 1400 may be configured to implement the method described in the foregoing method embodiments. The apparatus 1400 may be one or more of a chip, a first terminal, a second terminal, and a network device.

The apparatus 1400 may include one or more processors 1410, and the processor 1410 may support the apparatus 1400 to implement the method described in the foregoing method embodiments. The processor 1410 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 1400 may further include one or more memories 1420 storing a program, and the program may be executed by the processor 1410 to cause the processor 1410 to perform the method described in the foregoing method embodiments. The memory 1420 may be independent of the processor 1410 or may be integrated into the processor 1410.

The apparatus 1400 may further include a transceiver 1430, and the processor 1410 may communicate with another device or chip via the transceiver 1430. For example, the processor 1410 may perform data transceiving with another device or chip via the transceiver 1430.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that, in the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

It should be understood that the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

It should be understood that, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for wireless communication, comprising:
a network device determining, based on first information, one or more of the following events:
whether a first transmission occasion for a first terminal to transmit a small data packet is valid; and
whether a second transmission occasion for a second terminal to transmit a message A in a two-step random access procedure is valid;
wherein resources of the second transmission occasion at least partially overlap with resources of the first transmission occasion; and
wherein the first information includes one or more of:
a service type of the small data packet;
a trigger condition for triggering two-step random access; and
a number of retransmissions for the small data packet.

2. The method according to claim 1, wherein the first transmission occasion is valid or the second transmission occasion is invalid if the first information meets a first condition, and the first condition includes one or more of:
the service type of the small data packet being an ultra-reliable low latency communication, URLLC, service;
the service type of the small data packet being a massive machine type communication, mMTC, service;
the trigger condition for triggering the two-step random access not including beam failure recovery;
the trigger condition for triggering the two-step random access not including scheduling request, SR, failure; and
the trigger condition for triggering the two-step random access not including requesting other system information, SI.

3. The method according to claim 1, wherein the first transmission occasion is invalid or the second transmission occasion is valid if the first information meets a second condition, and the second condition includes one or more of:
the service type of the small data packet being an enhance mobile broadband, eMBB, service;
the service type of the small data packet being a URLLC service;
the trigger condition for triggering the two-step random access including beam failure recovery; and
the trigger condition for triggering the two-step random access including SR failure;
the trigger condition for triggering the two-step random access including requesting other SI; and
the number of retransmissions for the small data packet being higher than a preset threshold.

4. The method according to any one of claims 1 to 3, wherein the service type of the small data packet is determined based on the resources of the first transmission occasion.

5. The method according to claim 4, wherein the service type of the small data packet includes a plurality of service types, the plurality of service types respectively correspond to a plurality of resource pools, and resources in each resource pool of the plurality of resource pools are used to transmit a small data packet of a service type corresponding to the resource pool.

6. The method according to claim 5, wherein:
a size of a resource pool corresponding to the URLLC service is greater than a size of a resource pool corresponding to the mMTC service;
the size of the resource pool corresponding to the mMTC service is greater than a size of a resource pool corresponding to the eMBB service; and
the size of the resource pool corresponding to the URLLC service is greater than the size of the resource pool corresponding to the eMBB service.

7. The method according to claim 5 or claim 6, wherein the plurality of resource pools respectively correspond to a plurality of timers, and the plurality of timers are respectively configured to define durations in which the resources in the plurality of resource pools are used to transmit small data packets of corresponding service types.

8. The method according to claim 7, wherein durations of the plurality of timers are equal.

9. The method according to claim 7, wherein durations of the plurality of timers are not equal.

10. The method according to claim 9, wherein the plurality of service types include a first service and a second service, the first service corresponds to a first resource pool, the second service corresponds to a second resource pool, the first resource pool corresponds to a first timer, and the second resource pool corresponds to a second timer; and
wherein if a duration of the first timer is less than a duration of the second timer, resources in the first resource pool are used for transmission of a small data packet of the second service after the first timer expires.

11. The method according to any one of claims 7 to 10, wherein:
a duration of a timer corresponding to a resource pool of the URLLC service is greater than a duration of a timer corresponding to a resource pool of the mMTC service;
the duration of the timer corresponding to the resource pool of the mMTC service is greater than a duration of a timer corresponding to a resource pool of the eMBB service; and
the duration of the timer corresponding to the resource pool of the URLLC service is greater than the duration of the timer corresponding to the resource pool of the eMBB service.

12. The method according to any one of claims 1 to 11, wherein the resources of the first transmission occasion are configured grant small data transmission, CG-SDT, resources.

13. A method for wireless communication, comprising:
a first terminal transmitting a small data packet to a network device on a first transmission occasion, wherein resources of the first transmission occasion at least partially overlap with resources of a second transmission occasion; wherein the second transmission occasion is used for a second terminal to transmit a message A in a two-step random access procedure to the network device, and whether the first transmission occasion or the second transmission occasion is valid is determined based on first information; and
wherein the first information includes one or more of:
a service type of the small data packet;
a trigger condition for triggering two-step random access; and
a number of retransmissions for the small data packet.

14. The method according to claim 13, wherein the first transmission occasion is valid or the second transmission occasion is invalid if the first information meets a first condition, and the first condition includes one or more of:
the service type of the small data packet being an ultra-reliable low latency, URLLC, service;
the service type of the small data packet being a massive machine type communication, mMTC, service;
the trigger condition for triggering the two-step random access not including beam failure recovery;
the trigger condition for triggering the two-step random access not including scheduling request, SR, failure; and
the trigger condition for triggering the two-step random access not including requesting other system information, SI.

15. The method according to claim 13, wherein the first transmission occasion is invalid or the second transmission occasion is valid if the first information meets a second condition, and the second condition includes one or more of:
the service type of the small data packet being an enhance mobile broadband, eMBB, service;
the service type of the small data packet being a URLLC service;
the trigger condition for triggering the two-step random access including beam failure recovery; and
the trigger condition for triggering the two-step random access including SR failure;
the trigger condition for triggering the two-step random access including requesting other SI; and
the number of retransmissions for the small data packet being higher than a preset threshold.

16. The method according to any one of claims 13 to 15, wherein the service type of the small data packet is determined based on the resources of the first transmission occasion.

17. The method according to claim 16, wherein the service type of the small data packet includes a plurality of service types, the plurality of service types respectively correspond to a plurality of resource pools, and resources in each resource pool of the plurality of resource pools are used to transmit a small data packet of a service type corresponding to the resource pool.

18. The method according to claim 17, wherein:
a size of a resource pool corresponding to the URLLC service is greater than a size of a resource pool corresponding to the mMTC service;
the size of the resource pool corresponding to the mMTC service is greater than a size of a resource pool corresponding to the eMBB service; and
the size of the resource pool corresponding to the URLLC service is greater than the size of the resource pool corresponding to the eMBB service.

19. The method according to claim 17 or claim 18, wherein the plurality of resource pools respectively correspond to a plurality of timers, and the plurality of timers are respectively configured to define durations in which the resources in the plurality of resource pools are used to transmit small data packets of corresponding service types.

20. The method according to claim 19, wherein durations of the plurality of timers are equal.

21. The method according to claim 19, wherein durations of the plurality of timers are not equal.

22. The method according to claim 21, wherein the plurality of service types include a first service and a second service, the first service corresponds to a first resource pool, the second service corresponds to a second resource pool, the first resource pool corresponds to a first timer, and the second resource pool corresponds to a second timer; and
wherein if a duration of the first timer is less than a duration of the second timer, resources in the first resource pool are used for transmission of a small data packet of the second service after the first timer expires.

23. The method according to any one of claims 19 to 22, wherein:
a duration of a timer corresponding to a resource pool of the URLLC service is greater than a duration of a timer corresponding to a resource pool of the mMTC service;
the duration of the timer corresponding to the resource pool of the mMTC service is greater than a duration of a timer corresponding to a resource pool of the eMBB service; and
the duration of the timer corresponding to the resource pool of the URLLC service is greater than the duration of the timer corresponding to the resource pool of the eMBB service.

24. The method according to any one of claims 13 to 23, wherein the resources of the first transmission occasion are configured grant small data transmission, CG-SDT, resources.

25. A method for wireless communication, comprising:
a second terminal transmitting a message A in a two-step random access procedure to a network device on a second transmission occasion, wherein resources of the second transmission occasion at least partially overlap with resources of a first transmission occasion; wherein the first transmission occasion is used for a first terminal to transmit a small data packet to the network device, and whether the first transmission occasion or the second transmission occasion is valid is determined based on first information; and
wherein the first information includes one or more of:
a service type of the small data packet;
a trigger condition for triggering two-step random access; and
a number of retransmissions for the small data packet.

26. The method according to claim 25, wherein the first transmission occasion is valid or the second transmission occasion is invalid if the first information meets a first condition, and the first condition includes one or more of:
the service type of the small data packet being an ultra-reliable low latency, URLLC, service;
the service type of the small data packet being a massive machine type communication, mMTC, service;
the trigger condition for triggering the two-step random access not including beam failure recovery;
the trigger condition for triggering the two-step random access not including scheduling request, SR, failure; and
the trigger condition for triggering the two-step random access not including requesting other system information, SI.

27. The method according to claim 25, wherein the first transmission occasion is invalid or the second transmission occasion is valid if the first information meets a second condition, and the second condition includes one or more of:
the service type of the small data packet being an enhance mobile broadband, eMBB, service;
the service type of the small data packet being a URLLC service;
the trigger condition for triggering the two-step random access including beam failure recovery; and
the trigger condition for triggering the two-step random access including SR failure;
the trigger condition for triggering the two-step random access including requesting other SI; and
the number of retransmissions for the small data packet being higher than a preset threshold.

28. The method according to any one of claims 25 to 27, wherein the service type of the small data packet is determined based on the resources of the first transmission occasion.

29. The method according to claim 28, wherein the service type of the small data packet includes a plurality of service types, the plurality of service types respectively correspond to a plurality of resource pools, and resources in each resource pool of the plurality of resource pools are used to transmit a small data packet of a service type corresponding to the resource pool.

30. The method according to claim 29, wherein:
a size of a resource pool corresponding to the URLLC service is greater than a size of a resource pool corresponding to the mMTC service;
the size of the resource pool corresponding to the mMTC service is greater than a size of a resource pool corresponding to the eMBB service; and
the size of the resource pool corresponding to the URLLC service is greater than the size of the resource pool corresponding to the eMBB service.

31. The method according to claim 29 or claim 30, wherein the plurality of resource pools respectively correspond to a plurality of timers, and the plurality of timers are respectively configured to define durations in which the resources in the plurality of resource pools are used to transmit small data packets of corresponding service types.

32. The method according to claim 31, wherein durations of the plurality of timers are equal.

33. The method according to claim 31, wherein durations of the plurality of timers are not equal.

34. The method according to claim 33, wherein the plurality of service types include a first service and a second service, the first service corresponds to a first resource pool, the second service corresponds to a second resource pool, the first resource pool corresponds to a first timer, and the second resource pool corresponds to a second timer; and
wherein if a duration of the first timer is less than a duration of the second timer, resources in the first resource pool are used for transmission of a small data packet of the second service after the first timer expires.

35. The method according to any one of claims 31 to 34, wherein:
a duration of a timer corresponding to a resource pool of the URLLC service is greater than a duration of a timer corresponding to a resource pool of the mMTC service;
the duration of the timer corresponding to the resource pool of the mMTC service is greater than a duration of a timer corresponding to a resource pool of the eMBB service; and
the duration of the timer corresponding to the resource pool of the URLLC service is greater than the duration of the timer corresponding to the resource pool of the eMBB service.

36. The method according to any one of claims 25 to 35, wherein the resources of the first transmission occasion are configured grant small data transmission, CG-SDT, resources.

37. An apparatus for wireless communication, wherein the apparatus is a network device and comprises:
a determining unit, configured to determine, based on first information, one or more of the following events:
whether a first transmission occasion for a first terminal to transmit a small data packet is valid; and
whether a second transmission occasion for a second terminal to transmit a message A in a two-step random access procedure is valid;
wherein resources of the second transmission occasion at least partially overlap with resources of the first transmission occasion; and
wherein the first information includes one or more of:
a service type of the small data packet;
a trigger condition for triggering two-step random access; and
a number of retransmissions for the small data packet.

38. The apparatus according to claim 37, wherein
the first transmission occasion is valid or the second transmission occasion is invalid if the first information meets a first condition, and the first condition includes one or more of:
the service type of the small data packet being an ultra-reliable low latency communication, URLLC, service;
the service type of the small data packet being a massive machine type communication, mMTC, service;
the trigger condition for triggering the two-step random access not including beam failure recovery;
the trigger condition for triggering the two-step random access not including scheduling request, SR, failure; and
the trigger condition for triggering the two-step random access not including requesting other system information, SI.

39. The apparatus according to claim 37, wherein the first transmission occasion is invalid or the second transmission occasion is valid if the first information meets a second condition, and the second condition includes one or more of:
the service type of the small data packet being an enhance mobile broadband, eMBB, service;
the service type of the small data packet being a URLLC service;
the trigger condition for triggering the two-step random access including beam failure recovery; and
the trigger condition for triggering the two-step random access including SR failure;
the trigger condition for triggering the two-step random access including requesting other SI; and
the number of retransmissions for the small data packet being higher than a preset threshold.

40. The apparatus according to any one of claims 37 to 39, wherein the service type of the small data packet is determined based on the resources of the first transmission occasion.

41. The apparatus according to claim 40, wherein the service type of the small data packet includes a plurality of service types, the plurality of service types respectively correspond to a plurality of resource pools, and resources in each resource pool of the plurality of resource pools are used to transmit a small data packet of a service type corresponding to the resource pool.

42. The apparatus according to claim 41, wherein:
a size of a resource pool corresponding to the URLLC service is greater than a size of a resource pool corresponding to the mMTC service;
the size of the resource pool corresponding to the mMTC service is greater than a size of a resource pool corresponding to the eMBB service; and
the size of the resource pool corresponding to the URLLC service is greater than the size of the resource pool corresponding to the eMBB service.

43. The apparatus according to claim 41 or claim 42, wherein the plurality of resource pools respectively correspond to a plurality of timers, and the plurality of timers are respectively configured to define durations in which the resources in the plurality of resource pools are used to transmit small data packets of corresponding service types.

44. The apparatus according to claim 43, wherein durations of the plurality of timers are equal.

45. The apparatus according to claim 43, wherein durations of the plurality of timers are not equal.

46. The apparatus according to claim 45, wherein the plurality of service types include a first service and a second service, the first service corresponds to a first resource pool, the second service corresponds to a second resource pool, the first resource pool corresponds to a first timer, and the second resource pool corresponds to a second timer; and
wherein if a duration of the first timer is less than a duration of the second timer, resources in the first resource pool are used for transmission of a small data packet of the second service after the first timer expires.

47. The apparatus according to any one of claims 43 to 46, wherein:
a duration of a timer corresponding to a resource pool of the URLLC service is greater than a duration of a timer corresponding to a resource pool of the mMTC service;
the duration of the timer corresponding to the resource pool of the mMTC service is greater than a duration of a timer corresponding to a resource pool of the eMBB service; and
the duration of the timer corresponding to the resource pool of the URLLC service is greater than the duration of the timer corresponding to the resource pool of the eMBB service.

48. The apparatus according to any one of claims 37 to 47, wherein the resources of the first transmission occasion are configured grant small data transmission, CG-SDT, resources.

49. An apparatus for wireless communication, wherein the apparatus is a first terminal and comprises:
a transmitting unit, configured to transmit a small data packet to a network device on a first transmission occasion, wherein resources of the first transmission occasion at least partially overlap with resources of a second transmission occasion; wherein the second transmission occasion is used for a second terminal to transmit a message A in a two-step random access procedure to the network device, and whether the first transmission occasion or the second transmission occasion is valid is determined based on first information; and
wherein the first information includes one or more of:
a service type of the small data packet;
a trigger condition for triggering two-step random access; and
a number of retransmissions for the small data packet.

50. The apparatus according to claim 49, wherein the first transmission occasion is valid or the second transmission occasion is invalid if the first information meets a first condition, and the first condition includes one or more of:
the service type of the small data packet being an ultra-reliable low latency, URLLC, service;
the service type of the small data packet being a massive machine type communication, mMTC, service;
the trigger condition for triggering the two-step random access not including beam failure recovery;
the trigger condition for triggering the two-step random access not including scheduling request, SR, failure; and
the trigger condition for triggering the two-step random access not including requesting other system information, SI.

51. The apparatus according to claim 49, wherein the first transmission occasion is invalid or the second transmission occasion is valid if the first information meets a second condition, and the second condition includes one or more of:
the service type of the small data packet being an enhance mobile broadband, eMBB, service;
the service type of the small data packet being a URLLC service;
the trigger condition for triggering the two-step random access including beam failure recovery; and
the trigger condition for triggering the two-step random access including SR failure;
the trigger condition for triggering the two-step random access including requesting other SI; and
the number of retransmissions for the small data packet being higher than a preset threshold.

52. The apparatus according to any one of claims 49 to 51, wherein the service type of the small data packet is determined based on the resources of the first transmission occasion.

53. The apparatus according to claim 52, wherein the service type of the small data packet includes a plurality of service types, the plurality of service types respectively correspond to a plurality of resource pools, and resources in each resource pool of the plurality of resource pools are used to transmit a small data packet of a service type corresponding to the resource pool.

54. The apparatus according to claim 53, wherein:
a size of a resource pool corresponding to the URLLC service is greater than a size of a resource pool corresponding to the mMTC service;
the size of the resource pool corresponding to the mMTC service is greater than a size of a resource pool corresponding to the eMBB service; and
the size of the resource pool corresponding to the URLLC service is greater than the size of the resource pool corresponding to the eMBB service.

55. The apparatus according to claim 53 or claim 54, wherein the plurality of resource pools respectively correspond to a plurality of timers, and the plurality of timers are respectively configured to define durations in which the resources in the plurality of resource pools are used to transmit small data packets of corresponding service types.

56. The apparatus according to claim 55, wherein durations of the plurality of timers are equal.

57. The apparatus according to claim 55, wherein durations of the plurality of timers are not equal.

58. The apparatus according to claim 57, wherein the plurality of service types include a first service and a second service, the first service corresponds to a first resource pool, the second service corresponds to a second resource pool, the first resource pool corresponds to a first timer, and the second resource pool corresponds to a second timer; and
wherein if a duration of the first timer is less than a duration of the second timer, resources in the first resource pool are used for transmission of a small data packet of the second service after the first timer expires.

59. The apparatus according to any one of claims 55 to 58, wherein:
a duration of a timer corresponding to a resource pool of the URLLC service is greater than a duration of a timer corresponding to a resource pool of the mMTC service;
the duration of the timer corresponding to the resource pool of the mMTC service is greater than a duration of a timer corresponding to a resource pool of the eMBB service; and
the duration of the timer corresponding to the resource pool of the URLLC service is greater than the duration of the timer corresponding to the resource pool of the eMBB service.

60. The apparatus according to any one of claims 49 to 59, wherein the resources of the first transmission occasion are configured grant small data transmission, CG-SDT, resources.

61. An apparatus for wireless communication, wherein the apparatus is a second terminal and comprises:
a transmitting unit, configured to transmit a message A in a two-step random access procedure to a network device on a second transmission occasion, wherein resources of the second transmission occasion at least partially overlap with resources of a first transmission occasion; wherein the first transmission occasion is used for a first terminal to transmit a small data packet to the network device, and whether the first transmission occasion or the second transmission occasion is valid is determined based on first information; and
wherein the first information includes one or more of:
a service type of the small data packet;
a trigger condition for triggering two-step random access; and
a number of retransmissions for the small data packet.

62. The apparatus according to claim 61, wherein
the first transmission occasion is valid or the second transmission occasion is invalid if the first information meets a first condition, and the first condition includes one or more of:
the service type of the small data packet being an ultra-reliable low latency, URLLC, service;
the service type of the small data packet being a massive machine type communication, mMTC, service;
the trigger condition for triggering the two-step random access not including beam failure recovery;
the trigger condition for triggering the two-step random access not including scheduling request, SR, failure; and
the trigger condition for triggering the two-step random access not including requesting other system information, SI.

63. The apparatus according to claim 61, wherein the first transmission occasion is invalid or the second transmission occasion is valid if the first information meets a second condition, and the second condition includes one or more of:
the service type of the small data packet being an enhance mobile broadband, eMBB, service;
the service type of the small data packet being a URLLC service;
the trigger condition for triggering the two-step random access including beam failure recovery; and
the trigger condition for triggering the two-step random access including SR failure;
the trigger condition for triggering the two-step random access including requesting other SI; and
the number of retransmissions for the small data packet being higher than a preset threshold.

64. The apparatus according to any one of claims 61 to 63, wherein the service type of the small data packet is determined based on the resources of the first transmission occasion.

65. The apparatus according to claim 64, wherein the service type of the small data packet includes a plurality of service types, the plurality of service types respectively correspond to a plurality of resource pools, and resources in each resource pool of the plurality of resource pools are used to transmit a small data packet of a service type corresponding to the resource pool.

66. The apparatus according to claim 65, wherein:
a size of a resource pool corresponding to the URLLC service is greater than a size of a resource pool corresponding to the mMTC service;
the size of the resource pool corresponding to the mMTC service is greater than a size of a resource pool corresponding to the eMBB service; and
the size of the resource pool corresponding to the URLLC service is greater than the size of the resource pool corresponding to the eMBB service.

67. The apparatus according to claim 65 or claim 66, wherein the plurality of resource pools respectively correspond to a plurality of timers, and the plurality of timers are respectively configured to define durations in which the resources in the plurality of resource pools are used to transmit small data packets of corresponding service types.

68. The apparatus according to claim 67, wherein durations of the plurality of timers are equal.

69. The apparatus according to claim 67, wherein durations of the plurality of timers are not equal.

70. The apparatus according to claim 69, wherein the plurality of service types include a first service and a second service, the first service corresponds to a first resource pool, the second service corresponds to a second resource pool, the first resource pool corresponds to a first timer, and the second resource pool corresponds to a second timer; and
wherein if a duration of the first timer is less than a duration of the second timer, resources in the first resource pool are used for transmission of a small data packet of the second service after the first timer expires.

71. The apparatus according to any one of claims 67 to 70, wherein:
a duration of a timer corresponding to a resource pool of the URLLC service is greater than a duration of a timer corresponding to a resource pool of the mMTC service;
the duration of the timer corresponding to the resource pool of the mMTC service is greater than a duration of a timer corresponding to a resource pool of the eMBB service; and
the duration of the timer corresponding to the resource pool of the URLLC service is greater than the duration of the timer corresponding to the resource pool of the eMBB service.

72. The apparatus according to any one of claims 61 to 71, wherein the resources of the first transmission occasion are configured grant small data transmission, CG-SDT, resources.

73. An apparatus for wireless communication, comprising a memory, a processor, and a communication interface, wherein the memory is configured to store a program, and the processor is configured to invoke the program in the memory to cause the terminal device to perform the method according to any one of claims 1 to 36.

74. An apparatus, comprising a processor, wherein the processor is configured to invoke a program from a memory to perform the method according to any one of claims 1 to 36.

75. A chip, comprising a processor, wherein the processor is configured to invoke a program from a memory to cause a device installed with the chip to perform the method according to any one of claims 1 to 36.

76. A computer-readable storage medium storing a program, wherein the program causes a computer to perform the method according to any one of claims 1 to 36.

77. A computer program product, comprising a program, wherein the program causes a computer to perform the method according to any one of claims 1 to 5.

78. A computer program, wherein the computer program causes a computer to perform the method o according to any one of claims 1 to 36.
